# EUROPÄISCHE PATENTSCHRIFT

(11) **EP 2 174 107 B1**
(45) Veröffentlichungstag und Bekanntmachung des Hinweises auf die Patenterteilung: **27.10.2010**
(21) Anmeldenummer: 08761293.3
(22) Anmeldetag: 23.06.2008
(51) Int. Cl.: G01L 23/10

(54) **PIEZOELEKTRISCHER DRUCKSENSOR**
PIEZOELECTRIC PRESSURE SENSOR
CAPTEUR DE PRESSION PIÉZOÉLECTRIQUE

(30) Priorität: 27.07.2007 AT 11872007
(43) Veröffentlichungstag der Anmeldung: 14.04.2010
(73) Patentinhaber: Piezocryst Advanced Sensorics GmbH, 8020 Graz (AT)
(72) Erfinder: FRIEDL, Alexander, A-8045 Graz (AT); MICHELITSCH, Wolfgang, A-8041 Graz (AT)
(74) Vertreter: Babeluk, Michael
(86) Internationale Anmeldenummer: PCT/EP2008/057925
(87) Internationale Veröffentlichungsnummer: WO 2009/015941

(56) Entgegenhaltungen:
- DE-A- 3 423 711
- FR-A- 1 031 155
- US-A- 4 735 091

## Beschreibung

Die Erfindung betrifft einen piezoelektrischen Drucksensor mit in einem Gehäuse eingesetzten piezoelektrischen Messelementen und einem druckseitig am Gehäuse angeordneten Membranelement, welches im Zentrum einer dünnen kreisringförmigen Membran einen zentralen Membranstempel aufweist, wobei die piezoelektrischen Messelemente radial außerhalb eines im Wesentlichen entlang der Sensorlängsachse eingesetzten Vorspannelementes angeordnet sind, welches die Gehäusebasis durchsetzt, zur Signalableitung dient und am membranseitigen Ende mit einem Druckstück verbunden ist.

Piezoelektrische Drucksensoren benötigen für eine hohe Linearität des Messsignals eine mechanische Vorspannung der piezoelektrischen Messelemente. Diese Vorspannung kann beispielsweise durch eine sogenannten Rohrfeder aufgebracht werden, welche die Messelemente umfasst, d.h. im Wesentlichen in einen zylindrischen Innenraum einschließt. Wie beispielsweise in Fig. 1 der EP 0 745 835 A2 dargestellt, dient die Rohrfeder dazu, die piezoelektrischen Messelemente sicher aneinander zu pressen, wobei die Rohrfeder möglichst massearm und elastisch als dünner Zylinder ausgeführt ist. Die Herstellung und der Einbau einer Rohrfeder ist allerdings aufwändig, so dass Verbesserungen angestrebt wurden.

Bei ungekühlten Drucksensoren kann zumindest für einen beschränkten Zeitraum die Vorspannung auch durch die Membran selbst aufgebracht werden, welche allerdings durch die bei Hochtemperatursensoren auftretenden Temperaturbelastungen (Temperaturen über 400°C) Spannungsverluste erleidet, die zu einer Veränderung der Sensorempfindlichkeit und zu einer Verschlechterung der Linearität führen. Die vorliegende Erfindung bezieht sich daher ausschließlich auf Drucksensoren mit separatem Vorspannelement.

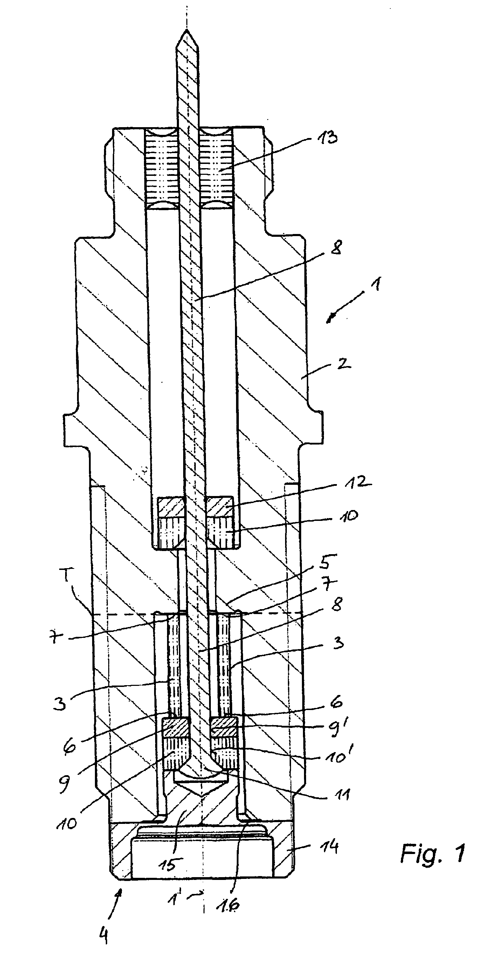

Aus einer älteren Anmeldung (A 641/2006) ist es gemäß einer Ausführungsvariante bekannt, ein inneres Vorspannelement vorzusehen, bei welchem das zentrale Vorspannelement zur Signalableitung dient, wobei die Messelemente radial außerhalb des Vorspannelementes angeordnet sind. Eine derartige Ausführungsvariante gemäß Stand der Technik wird nachfolgend in Fig. 1 näher beschrieben.

Derartige Drucksensoren werden beispielsweise zur Dauerüberwachung von Brennkraftmaschinen eingesetzt und müssen dazu hohe Standzeiten von bis zu, bzw. über 20.000 Stunden erreichen, um möglichst große Serviceintervalle garantieren zu können. Die Brennkraftmaschinen sind meist im Dauerbetrieb zur Stromerzeugung, Wärmeerzeugung oder zum Antrieb von Kraftfahrzeugen im Einsatz.

Die genannten Drucksensoren verwenden brennraumseitig flexible Membranen, die unter sehr ungünstigen Verhältnissen brechen können, wobei Teile der Membran in den Brennraum gelangen können und eine Verbindung zwischen Brennraum und Umgebung entstehen kann. Austretende Flammen und Druckwellen können große Schäden verursachen, sowie Mensch und Maschine gefährden.

Aufgabe der Erfindung ist es, bekannte Drucksensoren mit innenliegender Vorspannung derart zu verbessern, dass selbst bei Membranbruch vom Drucksensor keine Gefahren ausgehen und ein sicherer Betrieb einer mit dem Drucksensor ausgestatteten Vorrichtung gewährleistet ist.

Erfindungsgemäß wird diese Aufgabe dadurch gelöst, dass der zentrale Membranstempel am Druckstück befestigt ist und dass das Vorspannelement unter Zwischenlage eines gasdichten Isolierelementes an der Gehäusebasis vorgespannt ist.

Gemäß einer weiteren Ausgestaltung der Erfindung weist das Druckstück eine Dichtschulter auf, die bei einem Bruch der Messelemente an einem Dichtsitz im Inneren des Gehäuses anliegt und eine gasdichte Zone bildet.

Beim Versagen des Membranelementes sind zwei Schadensfälle zu unterscheiden:
a) die kreisringförmige Membran des Membranelementes ist gebrochen, aber die Messelemente sind noch intakt, d.h., das Vorspannelement, das sich über die Messelemente abstützt hält den Brennraum mit Hilfe des gasdichten Isolierelementes an der Gehäusebasis dicht;
b) sowohl die kreisringförmige Membran des Membranelementes als auch die Messelemente sind zerstört, wodurch das Vorspannelement gelockert wird und nicht mehr abdichtet, wobei jedoch die spezielle Ausformung des Druckstückes mit seiner Dichtschulter gegen das Sensorgehäuse abdichtet.

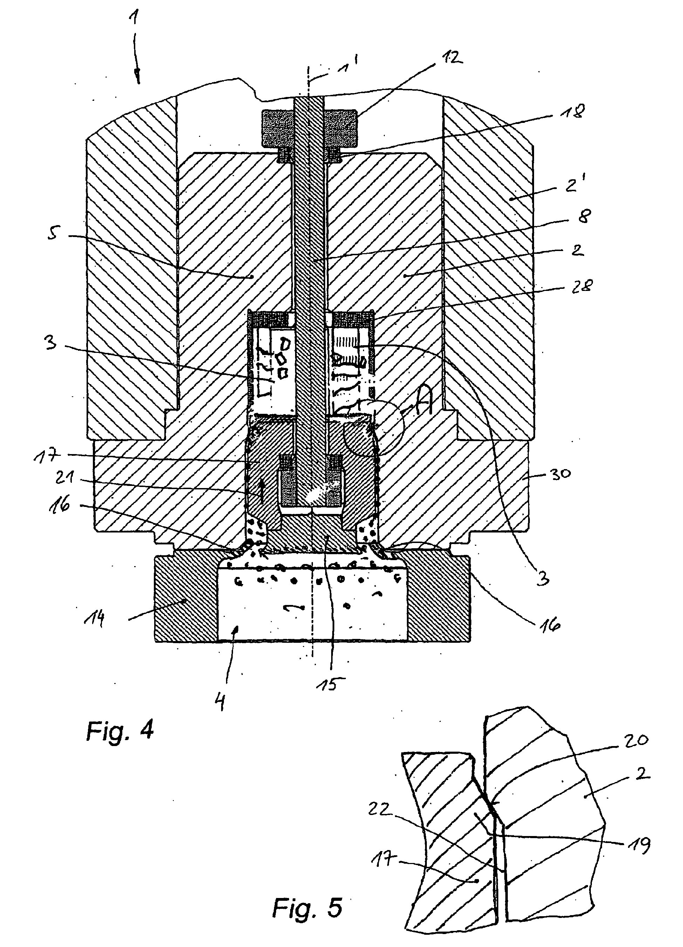

Die beiden Schadensfälle a) und b) bei Membrandurchbruch werden in den Fig. 4 und Fig. 5 im Detail dargestellt. Es zeigen:
- Fig. 1: einen piezoelektrischen Drucksensor in einem Axialschnitt gemäß Stand der Technik;
- Fig. 2: einen erfindungsgemäßen Drucksensor in einem Axialschnitt mit intaktem Membranelement;
- Fig. 3: den erfindungsgemäßen Drucksensor gemäß Fig. 1 mit gebroche- ner Membran;
- Fig. 4: den Drucksensor gemäß Fig. 1 mit gebrochener Membran und ge- brochenen Messelementen; sowie
- Fig. 5: ein Detail A aus Fig. 4 in vergrößerter Darstellung.

Der in Fig. 1 dargestellte piezoelektrische Drucksensor 1 gemäß Stand der Technik weist in einem Gehäuse 2 angeordnete, piezoelektrische Messelemente 3 auf, welche zwischen einem Membranelement 4 und einer Gehäusebasis 5 vorgespannt sind. Das Membranelement 4 ist mit dem äußeren Membranflansch 14 mit dem druckseitigen Ende des Gehäuses 2 verschweißt. Das Membranelement 4 weist einen zentralen Membranstempel 15 und eine dünne, kreisförmige Membran 16 auf, welche einstückig in den Membranflansch 14 übergeht.

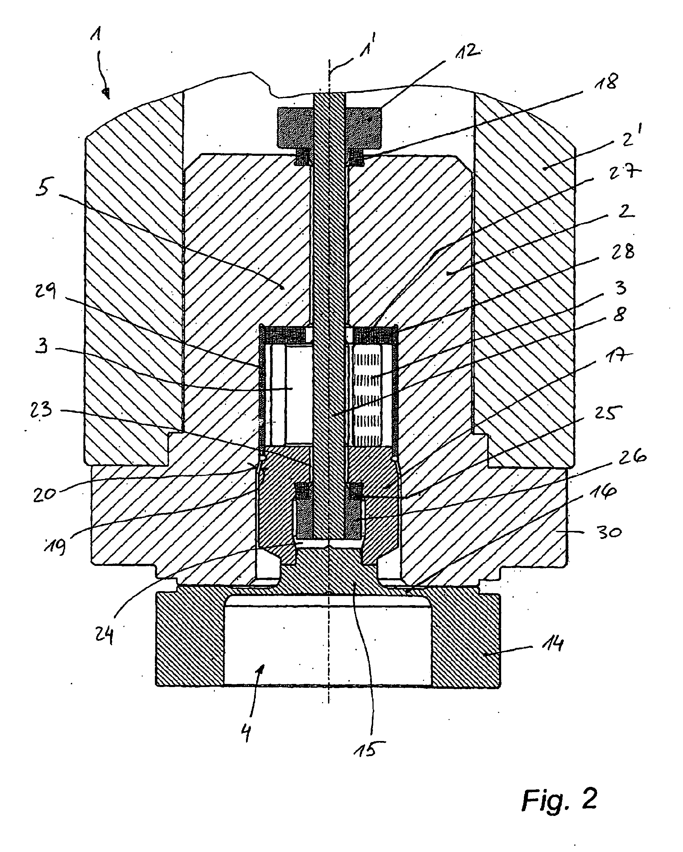

Die piezoelektrischen Messelemente 3 liegen radial außerhalb eines im Wesentlichen entlang der Sensorlängsachse 1' angeordneten Vorspannelementes 8, welches die piezoelektrischen Messelemente 3 gegen die Gehäusebasis 5 vorspannt. In gleicher Weise wie in Fig. 1 zwei parallel stehende Messelementplättchen 3 angeordnet sind, können auch mehrere, beispielsweise drei Messelementplättchen in Form eines Dreieckes äquidistant zum Vorspannelement 8 angeordnet sein (siehe Fig. 2 bis Fig. 4).

Das Gehäuse 2 kann mehrteilig ausgeführt sein und z.B. entlang der Linie T eine Teilung aufweisen, an welcher die Gehäuseteile nach der Montage der Messelemente 3 miteinander verschweißt werden.

Die piezoelektrischen Messelemente 3 weisen an deren Schmalseiten 6 eine kreisringförmige Ableitelektrode 9, sowie in Richtung des Membranelementes 4 ein elektrisches Isolierelement 10 auf, wobei eine elektrisch leitende Verbindung zwischen dem Vorspannelement 8 und der Ableitelektrode 9 hergestellt ist, so dass das zentrale Vorspannelement 8 gleichzeitig zur Signalableitung dient. Die Messung erfolgt dabei in Bezug auf die Gehäusemasse.

Das Vorspannelement 8 durchsetzt die Ableitelektrode 9 und das Isolierelement 10 jeweils durch Durchtrittsöffnungen 9', 10', wobei das Vorspannelement 8 mit einer konischen Erweiterung 11 im Isolierelement 10 verankert ist und gegen ein weiters Isolierelemente 10 an der der Gehäusebasis 5 gegenüberliegenden Seite des Sensorgehäuses 2 vorgespannt ist. Das Vorspannelemente 8 wird durch ein Fixierelemente 12 in der vorgespannten Stellung gehalten, wobei das Fixierelement 12 mit dem zentralen Vorspannelement 8 verschraubt oder verschweißt sein kann.

Das Vorspannelement 8, welches gleichzeitig der Signalableitung dient, tritt an der der Membran 4 gegenüberliegenden Seite des Sensorgehäuses 2 durch ein Isolierelement 13 aus, welches wie die Isolierelemente 10 aus Keramik bestehen kann.

Bei einem Einsatz des Sensors in der Brennraumwand einer hier nicht dargestellten Brennkraftmaschine, kann bei einem Membranbruch, d.h. bei einer Zerstörung der dünnen, kreisringförmigen Membran 16 des Membranelementes 4, der Membranstempel 15 in den Brennraum fallen und dort Schäden verursachen. Weiters können heiße Abgase in das Innere des Drucksensors eindringen. Bei einer längeren Einwirkung der heißen Abgase auf die Messelemente 3 werden diese zerstört, so dass sich das Vorspannelemente 8 nicht mehr an den Messelementen 3 abstützen kann und es zu einer Lockerung des Vorspannelementes 8, sowie zu einer Zerstörung der Isolierelemente 10, 13 kommt. Das kann in der Folge zur Freisetzung von heißen Abgasen und Flammen aus dem Brennraum führen.

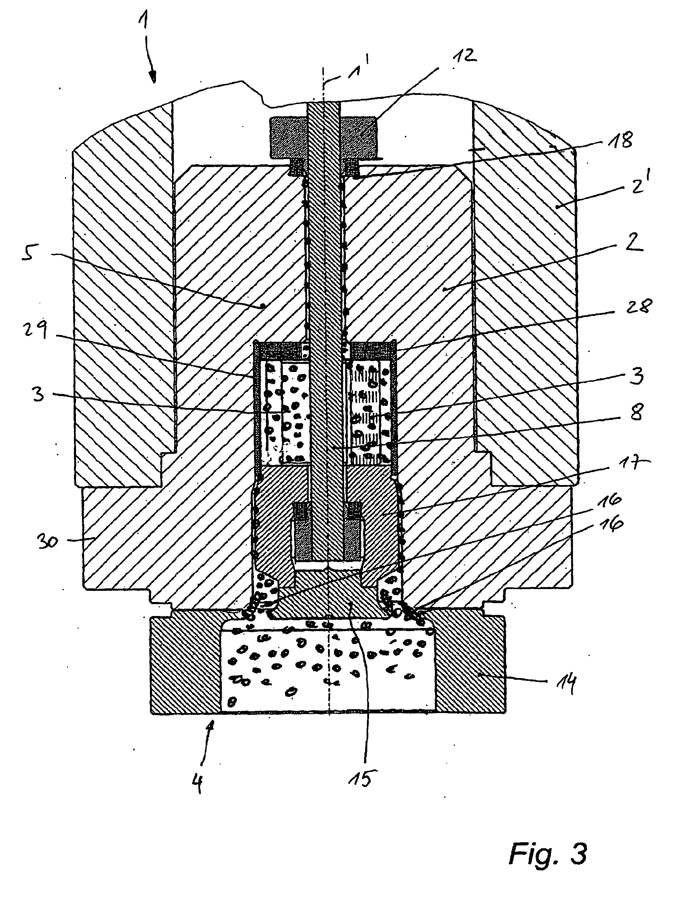

Der in den Fig. 2 bis Fig. 5 dargestellte, erfindungsgemäße piezoelektrische Drucksensor 1 weist folgende Verbesserungen auf, um selbst im Falle eines Membranbruches die oben beschriebenen Folgeschäden zu verhindern:
- Der zentrale Membranstempel 15 ist am Druckstück 17 befestigt, wodurch dieser - selbst bei einem Membranbruch - nicht in das Innere der Brennkammer eines Motors gelangen kann.
- Das Vorspannelement 8 ist unter Zwischenlage eines gasdichten Isolierelementes 18 an der Gehäusebasis 5 vorgespannt. Wie in Fig. 3 dargestellt, kann bei diesem Szenario das heiße Abgas (dargestellte als schwarze Punkte) nur bis zum Isolierelement 18 gelangen, jedoch den Drucksensor nicht verlassen. Das System bleibt somit selbst bei einem Membranbruch zur Umgebung gasdicht.
- Das Druckstück 17 weist eine Dichtschulter 19 auf, die bei einem Bruch der Membran 16 und der Messelemente 3 (siehe Fig. 4) an einem Dichtsitz 20 im Inneren des Gehäuses 2 anliegt, sobald das Druckstück 17 von dem im Brennraum herrschenden Druck in Richtung des Pfeils 21 bewegt wird und eine gasdichte Zone ausbildet.

Die Situation im Spalt 22 zwischen Druckstück 17 und Innenwand des Gehäuses 2 ist im Detail in Fig. 5 dargestellt. Die Flächen der Dichtschulter 19 und des Dichtsitzes 20 schließen mit der Achse 1' des Drucksensors 1 jeweils einen spitzen Winkel ein und sind derart aufeinander abgestimmt, dass sich die beiden Teile 15, 17 - nach der Zerstörung der Messelemente 3 - bei einem Druckstoß aus dem Brennraum ineinander verkeilen bzw. festreiben.

Der zentrale Membranstempel 15 kann beispielsweise durch Schweißen, Kleben, Schrauben oder eine Schrumpfpassung mit dem Druckstück 17 verbunden sein.

Erfindungsgemäß weist das Druckstück 17 eine Bohrung 23 auf, welche das Vorspannelement 8 mit Spiel durchsetzt, wobei in einer membranseitigen Aufnahme 24 des Druckstückes 17 eine Isolierscheibe 25 und ein Fixierelement 26 (beispielsweise eine Mutter) zur Festlegung des Vorspannelementes 8 angeordnet sind.

Die Messelemente 3 stehen auf der der Gehäusebasis 5 zugewandten Seite mit einer dünnen Ableitelektrode 27 in Kontakt, die das Vorspannelement 8 kontaktiert und durch eine Isolierscheibe 28 zur Gehäusebasis 5 elektrisch isoliert ist. An der Außenseite der Messelemente 3 ist eine zylindrische Isolierhülse 29, beispielsweise aus Kunststoff, angeordnet, welche während der Montage als Zentrierhilfe dient.

Das Gehäuse 2, welches mit Spiel in einem Außengehäuse 2' angeordnet ist, weist einen scheibenförmigen Flansch 30 auf, der mit dem Membranflansch 14 verschweißt ist. Die einzelnen Teile 2, 2' des Gehäuses werden ebenfalls im Flanschbereich miteinander verschweißt. Der Drucksensor 1 kann in eine (hier nicht dargestellte) Messbohrung eingesteckt oder mit Hilfe eines Außengewindes des Außengehäuses 2' eingeschraubt sein.

## Patentansprüche

1. Piezoelektrischer Drucksensor (1) mit in einem Gehäuse (2) eingesetzten piezoelektrischen Messelementen (3) und einem druckseitig am Gehäuse (2) angeordneten Membranelement (4), welches im Zentrum einer dünnen kreisringförmigen Membran (16) einen zentralen Membranstempel (15) aufweist, wobei die piezoelektrischen Messelemente (3) radial außerhalb eines im Wesentlichen entlang der Sensorlängsachse (1') eingesetzten Vorspannelementes (8) angeordnet sind, welches die Gehäusebasis (5) durchsetzt, zur Signalableitung dient und am membranseitigen Ende mit einem Druckstück (17) verbunden ist, **dadurch gekennzeichnet, dass** der zentrale Membranstempel (15) am Druckstück (17) befestigt ist und dass das Vorspannelement (8) unter Zwischenlage eines gasdichten Isolierelementes (18) an der Gehäusebasis (5) vorgespannt ist.

2. Piezoelektrischer Drucksensor (1) nach Anspruch 1, **dadurch gekennzeichnet, dass** das Druckstück (17) eine Dichtschulter (19) aufweist, die bei einem Bruch der Messelemente (3) an einem Dichtsitz (20) im Inneren des Gehäuses (2) anliegt und eine gasdichte Zone bildet.

3. Piezoelektrischer Drucksensor (1) nach Anspruch 1 oder 2, **dadurch gekennzeichnet, dass** das Druckstück (17) eine Bohrung (23) aufweist, welche das Vorspannelement (8) mit Spiel durchsetzt, sowie dass in einer membranseitigen Aufnahme (24) des Druckstückes (17) eine Isolierscheibe (25) und ein Fixierelement (26) zur Festlegung des Vorspannelementes (8) angeordnet sind.

4. Piezoelektrischer Drucksensor (1) nach einem der Ansprüche 1 bis 3, **dadurch gekennzeichnet, dass** die Messelemente (3) auf der der Gehäusebasis (5) zugewandten Seite mit einer Ableitelektrode (27) in Kontakt stehen, wobei die Ableitelektrode (27) das Vorspannelement (8) kontaktiert und durch eine Isolierscheibe (28) zur Gehäusebasis (5) elektrisch isoliert ist.

5. Piezoelektrischer Drucksensor (1) nach einem der Ansprüche 1 bis 4, **dadurch gekennzeichnet, dass** die Messelemente (3) in einer zylindrischen Isolierhülse (29) angeordnet sind.

## Claims

1. Piezoelectric pressure sensor (1) comprising piezo-electric measuring elements (3) inserted into a housing (2) and a membrane element (4) disposed on the pressure side of the housing (2), said membrane element (4) having a centered membrane stamp (15) at the centre of a thin annular membrane (16), where the piezoelectric measuring elements (3) are radially disposed outwards from a prestressing element (8) extending essentially along the longitudinal axis (1') of the sensor, which prestressing element (8) passes through the base (5) of the housing and serves as a lead for the sensor signal and is connected to a pressure body (17) at its end adjacent to the membrane, **characterised in that** the centered membrane stamp (15) is attached to the pressure body (17), and that the prestressing element (8) is prestressed against the housing base (5) with a gas-tight insulating element (18) interposed.

2. Piezoelectric pressure sensor (1) according to claim 1, **characterised in that** the pressure body (17) has a sealing shoulder (19), which upon failure of the measuring elements (3) will fit against a sealing seat (20) in the interior of the housing (2), thus forming a gas-tight zone.

3. Piezoelectric pressure sensor (1) according to claim 1 or 2, **characterised in that** the pressure body (17) has a bore (23), through which the prestressing element (8) passes with play, and that in a recess (24) on the membrane side of the pressure body (17) an insulating disc (25) and a fixing element (26) are provided to hold the prestressing element (8) in place.

4. Piezoelectric pressure sensor (1) according to any of claims 1 to 3, **characterised in that** the measuring elements (3) contact a pick-up electrode (27) on the side facing the housing base (5), said pick-up electrode (27) contacting the prestressing element (8) and being electrically insulated from the housing base (5) by an insulating disc (28).

5. Piezoelectric pressure sensor (1) according to any of claims 1 to 4, **characterised in that** the measuring elements (3) are contained in a cylindrical insulating sleeve (29).

## Revendications

1. Capteur de pression piézo-électrique (1) comportant des éléments de mesure piézo-électriques (3) logés dans un boîtier (2) ainsi qu'un élément de membrane (4) installé sur le boîtier (2), du côté de la pression et qui comporte un poinçon à membrane (15), central, au centre d'une mince membrane (16) en forme d'anneau de cercle,
les éléments de mesure piézo-électriques (3) étant installés radialement à l'extérieur d'un élément de précontrainte (8) situé pratiquement le long de l'axe longitudinal (1') du capteur, cet élément relié à l'extrémité côté membrane à une pièce de pression (17) traversant la base (5) du boîtier pour transmettre les signaux,
capteur **caractérisé en ce que**
le poinçon à membrane (15), central, est fixé à la pièce de pression (17), et
l'élément de précontrainte (8) est précontraint à la base (5) du boîtier avec interposition d'un élément d'isolation (18) étanche aux gaz.

2. Capteur de pression piézo-électrique (1) selon la revendication 1,
**caractérisé en ce que**
la pièce de pression (17) comporte un épaulement d'étanchéité (19) qui, en cas de rupture des éléments de mesure (3), s'applique contre un siège d'étanchéité (20) à l'intérieur du boîtier (2) et forme une zone étanche aux gaz.

3. Capteur de pression piézo-électrique (1) selon la revendication 1 ou 2,
**caractérisé en ce que**
la pièce de pression (17) comporte un perçage (23) traversant l'élément de précontrainte (8) avec du jeu et l'élément de pression (17) reçu dans un logement (24), côté membrane, comporte un disque isolant (25) et un élément de fixation (26) pour fixer l'élément de précontrainte (8).

4. Capteur de pression piézo-électrique (1) selon l'une des revendications 1 à 3,
**caractérisé en ce que**
les éléments de mesure (3) sont en contact avec une électrode de sortie (27) du côté tourné vers la base (5) du boîtier,
l'électrode de sortie (27) étant en contact avec l'élément de précontrainte (8) en étant isolée électriquement de la base du boîtier (5) par un disque isolant (28).

5. Capteur de pression piézo-électrique (1) selon l'une des revendications 1 à 4,
**caractérisé en ce que**
les éléments de mesure (3) sont logés dans un manchon isolant (29) cylindrique.
